Europäisches Patentamt

European Patent Office

Office européen des brevets

(11) Publication number : **0 525 981 A1**

# (12) EUROPEAN PATENT APPLICATION

(21) Application number : 92305912.5

(22) Date of filing : 26.06.92

(51) Int. Cl.⁵ : **H04N 1/41**

(30) Priority : **01.07.91 GB 9114189**

(43) Date of publication of application :
**03.02.93 Bulletin 93/05**

(84) Designated Contracting States :
**DE GB**

(71) Applicant : **CROSFIELD ELECTRONICS LIMITED**
**Three Cherry Trees Lane**
**Hemel Hempstead Hertfordshire HP2 7RH (GB)**

(72) Inventor : **Kirk, Richard Antony**
**65 Hemel Hempstead Road**
**Redbourn, Hertfordshire, AN3 7NL (GB)**

(74) Representative : **Skone James, Robert Edmund**
**GILL JENNINGS & EVERY, Broadgate House, 7 Eldon Street**
**London EC2M 7LH (GB)**

(54) Improvements relating to data compression.

(57)  A method of compressing and decompressing data defining, in the spatial or frequency domain respectively, blocks of pixels of an image in which the data is transferred into the frequency or spatial domain comprises applying a function to the data. The applied function is a dither function (17), applied to the data in either the spatial or frequency domain during decompression. An inverse dither function (5) is applied to the data in either the frequency or spatial domain during compression.

Fig.3.

EP 0 525 981 A1

The invention relates to methods and apparatus for compressing and decompressing data defining pixels of an image.

In the field of image processing, large volumes of data are generated and it is normal to compress that data for the purposes of storage or transmission. One common form of data compression involves dividing an image into small, for example 8x8, pixel blocks which are then individually processed. Typically, each block is transformed into the frequency domain to define a uniform DC component and a number of non-uniform AC components. Typically, the total number of components is the same as the original number of values in the spatial domain (64). These values are then quantized and non-destructively encoded to reduce the volume of data.

Although this type of data compression works well, it can suffer from problems of truncation errors upon decompression. Consider the example of a very smooth and slow gradient. The DC value of an 8 x 8 region of 8-bit data will have 14 significant bits. For example an 8 x 8 square with 9 pixels set to 87 and 5 pixels set to 88 will have an average value of $87^9/_{16}$.

When decompressing we wish to have the same ratio of pixels set to 87 and 88 to give the same overall impression of shade. Where there is some AC signal when the values are truncated, they will probably be rounded up/down in roughly the right ratio.

However, suppose there is no AC component after quantization. The pixel values after the decompression transform are all set to the DC value of $87^9/_{16}$, supposing all 14 bits are kept. They will then all be rounded up to 88 or truncated down to 87. The smooth gradient will then be broken up into 8 x 8 squares with sharp boundaries.

In accordance with one aspect of the present invention, a method of compressing and decompressing data defining, in the spatial or frequency domain respectively, blocks of pixels of an image in which the data is transformed into the frequency or spatial domain, the method comprising applying a dither function to said data in said blocks in either the spatial domain or the frequency domain during decompression and applying the inverse of the dither function in the frequency domain or the spatial domain during compression if said dither function is to be applied during decompression.

Typically, application of a dither function comprises an addition and application of the inverse of said dither function comprises a subtraction.

Preferably, the method further comprises the step of determining whether a chosen one of said blocks of pixels satisfies a first predetermined condition and, if not, applying the dither function or the inverse of the dither function.

The first predetermined condition may include there being at least one AC component, or the "energy" of the block (related to the sum of the squares of the AC values) being greater than some threshold.

Typically, the dither function is set to zero both on compression or decompression provided that there is at least one non-zero AC transform component after quantisation.

In some cases it may not be necessary to apply the inverse of the dither function during compression, but this is generally safer.

We have dealt with the truncation problem mentioned above by introducing a dither function to the decompression process. This enables the number of bits defining the data to be increased during the compression process even when no AC components are present so that on decompression the dither function can be applied prior to any final truncation stage.

In some implementations we may wish to add/subtract the dither function even when AC values are present since we do not know whether the AC values will truncate to zero until we reach the quantization stage, though the dithering may have to be subtracted before the transform. The transform of the dither function may be added to the transform values instead.

If the dither function is applied in the spatial domain then it would typically comprise a matrix of values, one for each pixel. On the other hand, if the function is applied in the frequency domain then a good dither function may comprise a single value which Is subtracted from one component in the frequency domain. The [6,6] component of the matrix described below is a good one for this.

In general, the data will undergo a certain amount of pre- and post-processing relative to the application of the dither function as will be described in more detail below.

Typically, a different dither function will be applied to data defining each colour separation in the case of a multi-colour image although this is not essential.

In accordance with a second aspect of the present invention, apparatus for compressing and decompressing data defining pixels of an image in the spatial or frequency domain respectively, the apparatus comprising processing means for transforming blocks of the data into the frequency or spatial domain, and for applying a dither function either to said data in the frequency domain or to data in the spatial domain during decompression and applying the inverse of the dither function in the frequency domain or the spatial domain during compression if said dither function is to be applied during decompression.

Typically, the processing means will comprise a suitably programmed computer. An example of a method and apparatus according to the invention will now be described with reference to the accompanying drawings, in which:-

## EMBODIMENT

Figure 1 is a block diagram illustrating the compression process;

Figure 2 is a block diagram illustrating the decompression process with the dithering subtracted in the spatial domain; and

Figure 3 is a block diagram illustrating one example of apparatus for carrying out the processes of Figure 1 and Figure 2.

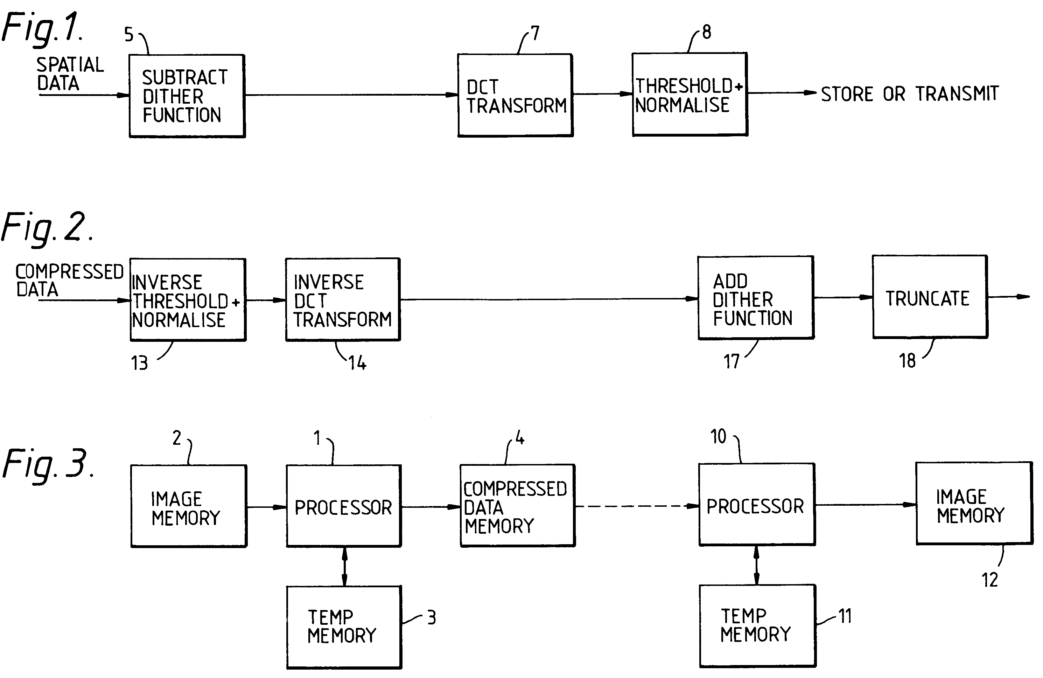

Figure 3 illustrates a processor 1 positioned at a compression site and coupled with an image memory 2, such as a disc store, which holds digital data defining the colour content of an image. Typically, images are defined by three or four colour separations, there being 8 bits for each colour component of each image. The processor 1 is also connected to a temporary memory 3 to enable the various processing steps to be completed and compressed data is stored in a memory 4.

The compression process commences by the subtraction 5 (Figure 1) of a dither function from each 8x8 block of pixel values. The dithering function may add another 2-6 bits at the least significant end. An example of a suitable dither function is given in Table 1 below.

## Table 1

### 8 x 8 Bayer dither

| 0 | 48 | 12 | 60 | 3 | 51 | 15 | 63 |
|---|----|----|----|---|----|----|----|
| 32 | 16 | 44 | 28 | 35 | 19 | 47 | 31 |
| 8 | 56 | 4 | 52 | 11 | 59 | 7 | 55 |
| 40 | 24 | 36 | 20 | 43 | 27 | 39 | 23 |
| 2 | 50 | 14 | 62 | 1 | 49 | 13 | 61 |
| 34 | 18 | 46 | 30 | 33 | 17 | 45 | 29 |
| 10 | 58 | 6 | 54 | 9 | 57 | 5 | 53 |
| 42 | 26 | 38 | 22 | 41 | 25 | 37 | 21 |

All values will be divided by 64 and all are positive assuming the dither is followed by a downwards truncation during decompression.

The dithered values are then transformed into the frequency domain by application of a DCT transform 7.

Finally, the transformed values are then thresholded and normalised by values chosen according to the "energy" of the original block so that each pixel block is then defined by a single DC component of 10 bits (the increased number of bits being due to the dithering process) and a number, usually a small number, of non-zero AC components. The thresholding step is shown at step 8 in Figure 1. The resultant data is then coded in a conventional manner and usually a significant reduction in the amount of data is achieved since apart from the original DC value and one or two AC components the remaining components will be zero and can be efficiently coded.

The processor 1 performs the steps shown in Figure 1 by storing in a temporary memory 3 the results of each step until the finally coded data is supplied to the compressed data memory 4.

Decompression of the data is essentially the inverse of the compression stage and, as shown in Figure 3, It is performed by a processor 10 coupled with a temporary memory 11, the decompressed data being stored in an image memory 12.

Initially, the coded data is decoded (not shown) to the original compressed form and then the Inverse of the previous threshold and normalising step (step 13) is applied. The resultant data is stored In the temporary memory 11. Processor 10 then performs an inverse discrete cosine transform on the data (step 14). The dither function shown in Table 1 is then added to the filtered data (step 17) which converts the digital values to 10 digits, the resultant values then being truncated to 8 bits (step 18).

In this example, the dither function is subtracted and added to data in the spatial domain. It would also be possible to apply the dither function after the DCT transform step 7 and before the inverse DCT transform step 14. Other dither functions are also possible. Also, other transformations could be used in steps 7 and 14, for example a Hadamard transform or the like.

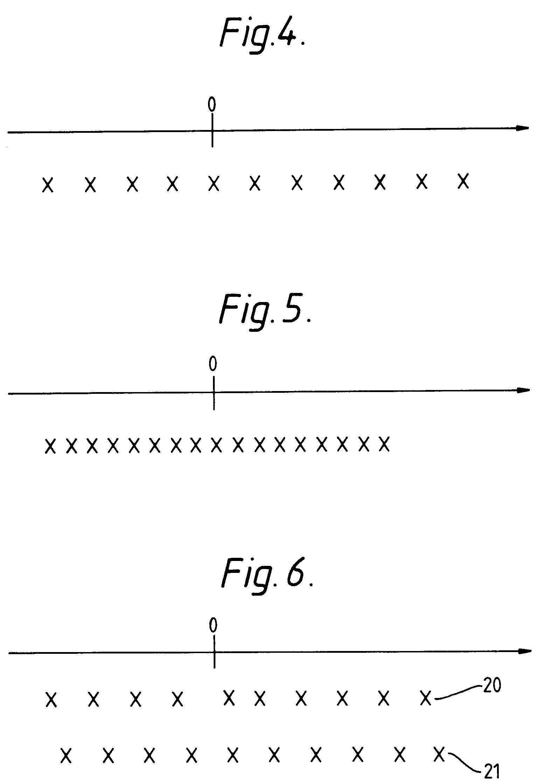

Any component of a transformed image may be represented as a vector. A plot of all possible values of this vector along an axis is shown in Figure 4, the variation being approximated to a number of equally spaced intervals. The approximation reduces the floating point number to an integer. The spacing of points may be reduced for greater accuracy as in Figure 5. The set of intervals are then offset from the origin either, all points 21 or the central point only 20. These are shown in Figure 6.

## Claims

1. A method of compressing and decompressing data defining, in the spatial or frequency domain respectively, blocks of pixels of an image in which the data is transformed into the frequency or spatial domain, the method comprising applying a dither function (17) to the data in the blocks in either the spatial domain or the frequency domain during decompression and applying the inverse of the dither function (5) in the frequency domain or the spatial domain during compression if the dither function is to be applied during decompression.

2. A method according to claim 1, wherein application of dither function comprises an addition (17) and application of the inverse of the dither function comprises a subtraction (5).

3. A method according to claim 1 or claim 2, the method further comprising the step of determining whether a chosen one of the blocks of pixels satisfies a first predetermined condition.

4. A method according to claim 3, wherein the first predetermined condition is that there is at least 1 AC component in the representation of the one of the blocks of pixels in the frequency domain.

5. A method according to claim 4, wherein the dither function is set to zero both on compression or decompression provided that there is at least one non-zero AC transform component after quantisation.

6. A method according to any preceding claim, wherein a different dither function is applied to data defining each colour separation of the image.

7. Apparatus for compressing and decompressing data defining pixels of an image in the spatial or frequency domain respectively, the apparatus comprising processing means (1,10) for transforming blocks of the data into the frequency or spatial domain, and for applying a dither function either to the data in the frequency domain or to data in the spatial domain during decompression and applying the inverse of the dither function in the frequency domain or the spatial domain during compression if the dither function is to be applied during decompression.

EP 0 525 981 A1

*Fig.1.*

SPATIAL DATA → | SUBTRACT DITHER FUNCTION (5) | → | DCT TRANSFORM (7) | → | THRESHOLD + NORMALISE (8) | → STORE OR TRANSMIT

*Fig.2.*

COMPRESSED DATA → | INVERSE THRESHOLD + NORMALISE (13) | → | INVERSE DCT TRANSFORM (14) | → | ADD DITHER FUNCTION (17) | → | TRUNCATE (18) | →

*Fig.3.*

| IMAGE MEMORY (2) | → | PROCESSOR (1) | → | COMPRESSED DATA MEMORY (4) | - - → | PROCESSOR (10) | → | IMAGE MEMORY (12) |

PROCESSOR (1) ↕ | TEMP MEMORY (3) |

PROCESSOR (10) ↕ | TEMP MEMORY (11) |

# Fig.4.

0

X  X  X  X  X  X  X  X  X  X  X

# Fig.5.

0

X X X X X X X X X X X X X X X X

# Fig.6.

0

X  X  X  X   X  X  X  X  X  X⎯⎯⎯20

X  X  X  X  X  X  X  X  X  X⎯⎯⎯21

# EP 0 525 981 A1

**European Patent Office**

## EUROPEAN SEARCH REPORT

Application Number

EP 92 30 5912

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | HANDBOOK OF PATTERN RECOGNITION AND IMAGE PROCESSING EDITED BY TZAY Y. YOUNG AND KING-SUN FU 1986, SAN DIEGO US pages 169 - 189 ALI HABIBI 'Image coding' * page 178, line 30 - page 179 * | 1 | H04N1/41 |
| A | PATENT ABSTRACTS OF JAPAN vol. 13, no. 144 (E-740)10 April 1989 ( FUJITSU LTD ) 14 December 1988 & JP-A-63 306 768 * the whole document * * abstract * | 1 | |
| A | EP-A-0 253 326 (HITACHI LTD) * page 3, line 17 - line 26 * | 1 | |
| A | US-A-4 475 127 (KAZUMOTO IINUMA) * the whole document * | 1 | |
| | ----- | | **TECHNICAL FIELDS SEARCHED (Int. Cl.5)** |
| | | | H04N G06F |

The present search report has been drawn up for all claims

| Place of search | Date of completion of the search | Examiner |
|---|---|---|
| THE HAGUE | 08 OCTOBER 1992 | CHATEAU J.P. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

7